# EUROPEAN PATENT APPLICATION

(11) **EP 3 419 135 A1**
(43) Date of publication of application: **26.12.2018**
(21) Application number: 18178818.3
(22) Date of filing: 20.06.2018
(51) Int. Cl.: H02H 9/02, H02H 3/08, B64D 45/00, B64C 25/42, B64C 25/26

(54) **POSITIVE TEMPERATURE COEFFICIENT DEVICE FOR AIRCRAFT CONTROL SYSTEMS**

(30) Priority: 20.06.2017 US 201715628058
(71) Applicant: Goodrich Corporation, Charlotte, NC 28217-4578 (US)
(72) Inventor: ZELL, Brian Keith, Dayton, OH 45415 (US)
(74) Representative: Dehns

(57) **Abstract**

A controller unit (100) for an aircraft control system may include a circuit board (105) and a positive temperature coefficient device (110). The circuit board (105) may include conductive traces and a plurality of mounted electronic components forming a circuit. The positive temperature coefficient device (110) may be configured to provide overcurrent protection for the circuit. The controller unit (100) may be located in explosion-restricted areas (101) of the aircraft (10).

## Description

### FIELD

The present disclosure relates to aircraft systems, and more specifically, to positive temperature coefficient devices in an aircraft control system architecture.

### BACKGROUND

Aircraft control systems often include multiple different types of controllers. Generally, each type of controller is specifically configured to communicate with and thus control a specific type of aircraft assembly. For example, a primary brake assembly is generally controlled by a primary brake controller. Certain controllers are configured to operate in explosion-restricted environments on the aircraft. Most conventional overcurrent circuit protection devices, such as fuses, melt or otherwise burn away in order to provide overcurrent protection, and such incendiary action is potentially problematic for explosion-restricted environments of an aircraft. Additionally, most conventional overcurrent circuit protection devices are one-time use devices. In other words, once a fuse is spent, it must be replaced in order to close the circuit, and replacing fuses in conventional aircraft control systems often involves removing a component from its installed location in order to mount a new fuse.

### SUMMARY

In various embodiments, the present disclosure provides a controller unit for an aircraft control system. The controller unit may include a circuit board having conductive traces and a plurality of mounted electronic components forming a circuit. The controller unit may also include a positive temperature coefficient device mounted to the circuit board. The positive temperature coefficient device is configured to provide overcurrent protection for the circuit, according to various embodiments.

In various embodiments, the positive temperature coefficient device is made from a polymeric material. For example, the polymeric material may include conductive particles distributed in an organic crystalline matrix. The conductive particles may include carbon black. In various embodiments, the positive temperature coefficient is resettable.

Also disclosed herein, according to various embodiments, is an aircraft control system of an aircraft. The aircraft control system may include an electronics bay that includes a controller slot and a controller unit mounted to the controller slot. In various embodiments, at least one of the electronics bay and the controller unit includes a positive temperature coefficient device configured to provide overcurrent circuit protection. In various embodiments, the at least one of the electronics bay and the controller unit is located in an explosion-restricted area of the aircraft. In various embodiments, the controller slot is a first controller slot of a plurality of controller slots. Each controller slot of the plurality of controller slots may correspond to and may be configured to electrically communicate with a respective aircraft assembly of a plurality of aircraft assemblies of the aircraft. In various embodiments, the controller unit is configured to control a landing assembly of the aircraft. In various embodiments, the controller unit is configured to control a braking assembly of the aircraft.

The present disclosure also provides, according to various embodiments, a method of repairing a controller unit in an aircraft. The method may include detaching a fuse from a current protection interface of a circuit board of the controller unit and mounting a positive temperature coefficient device to the current protection interface of the circuit board. The positive temperature coefficient device may provide overcurrent protection for the circuit board. In various embodiments, mounting the positive temperature coefficient device is performed with the controller unit in an installed configuration in the aircraft.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates an aircraft, in accordance with various embodiments;
FIG. 2 is a schematic block diagram of a controller unit for an aircraft control system, in accordance with various embodiments;
FIG. 3 is a schematic block diagram of an aircraft including a controller unit located in an explosion-restricted area of an aircraft, in accordance with various embodiments;
FIG. 4 illustrates a schematic view of an aircraft control system, in accordance with various embodiments; and
FIG. 5 is a schematic flowchart diagram of a method of repairing a controller unit in an aircraft, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the spirit and scope of the disclosure. Thus, the detailed description herein is presented for purposes of illustration only and not of limitation.

Aircraft include one or more types of aircraft assemblies, such as landing assemblies, wheel and brake assemblies, etc. While many details and examples are included throughout the present disclosure pertaining to aircraft landing and aircraft braking assemblies, the scope of the present disclosure is not limited to landing/braking assemblies.

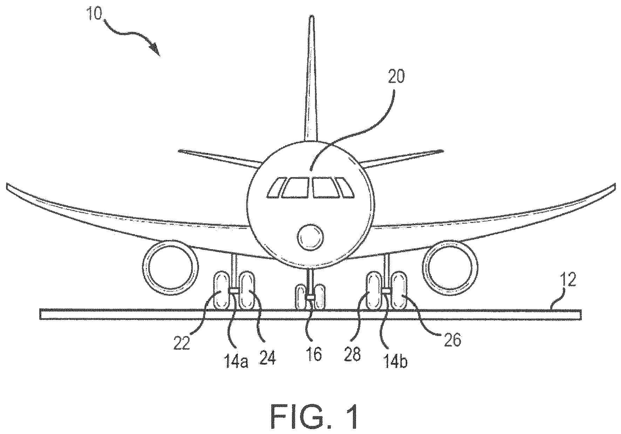

With reference to FIG. 1, an aircraft 10 on a runway 12 is shown in accordance with various embodiments. Aircraft 10 may comprise a right landing gear assembly 14a and a left landing gear assembly 14b. Nose landing gear assembly 16 is located under the nose 20 of aircraft 10. Each landing gear assembly is illustrated in FIG. 1 as having two wheels. For example, the right landing gear assembly 14a may comprise a plurality of wheels, such as a right outboard wheel 22 and a right inboard wheel 24. The left landing gear assembly 14b may comprise a plurality of wheels, such as a left outboard wheel 26 and a left inboard wheel 28. In various embodiments, aircraft 10 may include additional assemblies.

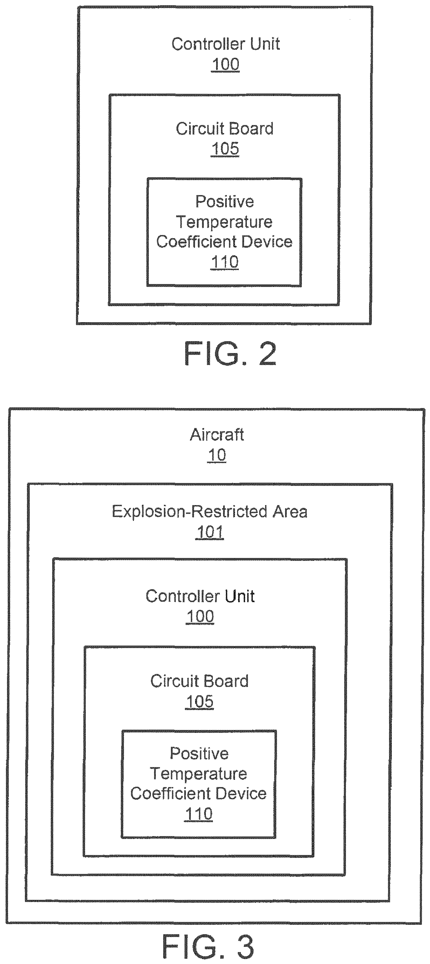

As described above, aircraft assemblies are actuated and controlled by controller units. In various embodiments, and with reference to FIG. 2, a controller unit 100 includes a circuit board 105 and a positive temperature coefficient device 110 mounted to the circuit board 105. The circuit board 105 may include one or more conductive traces and a plurality of mounted electronic components forming a circuit. The positive temperature coefficient device 110 provides overcurrent circuit protection for the circuit, according to various embodiments, as described in greater detail below. In various embodiments, the positive temperature coefficient device 110 is a POLY-FUSE® Resettable positive temperature coefficient device manufactured by Littlefuse® Inc.

The controller unit 100 may also include a processor and a tangible, non-transitory, computer-readable medium ("computer-readable medium"). The computer-readable medium includes instructions stored thereon that, in response to execution by the processor, cause the processor to perform various operations. Program code (i.e., program instructions and/or controller instructions), as described in greater detail below, may be loaded onto the computer-readable medium (also referred to herein as a tangible, non-transitory, memory). The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in In Re Nuijten to fall outside the scope of patentable subject matter under 35 U.S.C. § 101.

Conventional overcurrent circuit protection elements, such as fuses, have various drawbacks and shortcomings, as outlined above. In various embodiments, and with reference to FIGS. 2 and 3, the aircraft controller unit 100 provided herein includes an overcurrent circuit protection architecture that utilizes positive temperature coefficient devices 110 in addition to or instead of fuses. Positive temperature coefficient device 110 is a reversible (i.e., resettable) device that can provide repeat overcurrent protection, even after a current overload event. In various embodiments, positive temperature coefficient device 110 is made from a material that increases in resistance in response to a potentially damaging overcurrent, thereby limiting the circuit current to a safe/acceptable level.

In various embodiments, the increase in resistance of the positive temperature coefficient device 110 is caused, at least in part, by an increase in the local temperature of the positive temperature coefficient device 110. As long as the temperature remains elevated, the positive temperature coefficient device 110 maintains the higher resistance value. The positive temperature coefficient device 110 can be subsequently reset by cooling down the positive temperature coefficient device 110, thereby decreasing the resistance value and "closing" the circuit.

In various embodiments, the positive temperature coefficient device 110 is made from a polymeric material. For example, the positive temperature coefficient device 110 may be made from an organic crystalline material/matrix having conductive particles distributed therein. The organic crystalline polymeric material may include high density polyethylene, low density polyethylene, medium density polyethylene, copolymer of ethylene and acrylic acid, polypropylene, polyvinylidene fluoride, poly-1-butene, fluorinated ethylene/propylene copolymer, and the like. The conductive particles may include carbon black, which is a form of paracrystalline carbon.

In various embodiments, and with reference to FIG. 3, the aircraft 10 may include various locations that are explosion-restricted areas 101. The controller unit 100 having the positive temperature coefficient device 110 mounted to the circuit board 105 may be implemented in these explosion-restricted areas 101.

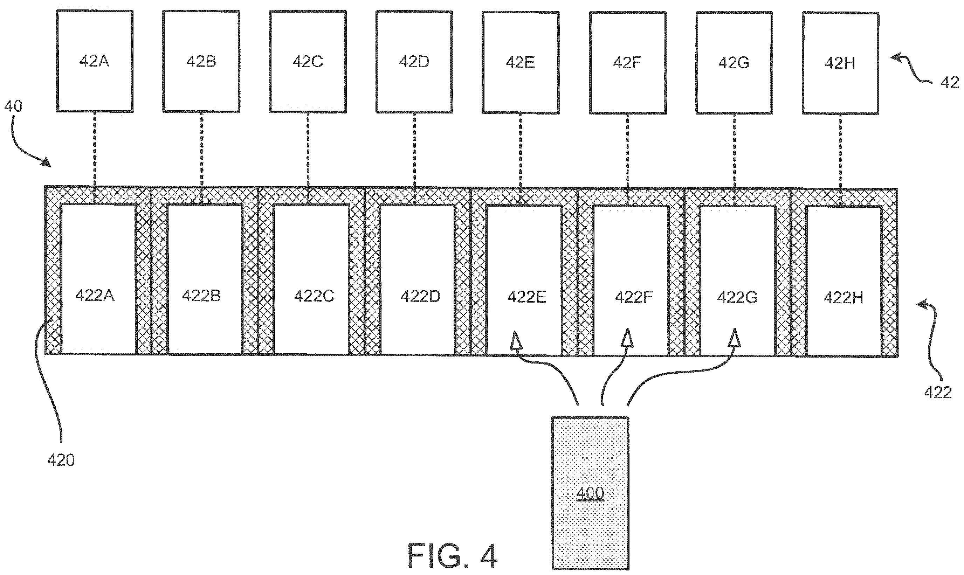

In various embodiments, and with reference to FIG. 4, an aircraft control system 40 is disclosed. The aircraft control system 40 includes, according to various embodiments, an electronics bay 420 that has a plurality of controller slots 422A, 422B, 422C, 422D, 422E, 422F, 422G, and 422H (when referring to the plurality of controller slots, reference number "422" will be used herein). The electronics bay 420 of the aircraft control system 40 may have more or less controller slots 422 than the number shown in FIG. 4. In various embodiments, the electronics bay 420 may have multiple rows, columns, and/or racks of controller slots and/or the electronics bay 420 may not be in a single location in the aircraft but instead may be comprised in different locations throughout the aircraft. That is, showing the controller slots 422 juxtaposed next to each other is a schematic, exemplary depiction only and thus does not limit the scope of the present disclosure as to the positioning, location, and configuration of the controller slots 422.

The plurality of controller slots 422 may be in electrical communication with a respective plurality of aircraft assemblies 42. For example, controller slot 422A may be in electrical communication with aircraft assembly 42A and so on for each of the aircraft assemblies 42A, 42B, 442C, 42D, 42E, 42F, 42G, and 42H (when referring to the plurality of aircraft assemblies, reference number "42" will be used herein). As mentioned above, the aircraft assemblies 42 may be located in different locations throughout the aircraft and may include various components, actuators, elements, and subsystems pertaining to different operations/features of the aircraft.

In various embodiments, controller unit 400, which may be similar to controller unit 100 described above, is mounted in one of the controller slots 422. In various embodiments, at least one of the electronics bay 420 and the controller unit 400 include a positive temperature coefficient device, such as the positive temperature coefficient device 110, that is configured to provide overcurrent circuit protection. Thus, the positive temperature coefficient device may provide overcurrent circuit protection for one or more controller slots 422 of an electronics bay 420 and/or for one or more aircraft assemblies 42. For example, the positive temperature coefficient device may be utilized with a controller unit that is configured to control a landing assembly of the aircraft or a braking assembly of the aircraft.

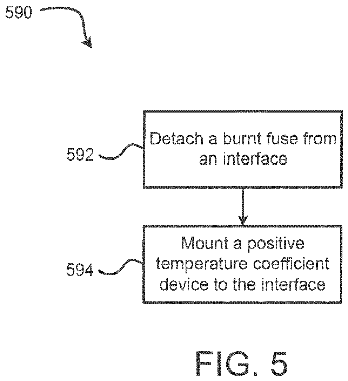

In various embodiments, and with reference to FIG. 5, a method 590 of repairing a controller unit in an aircraft is provided. The method 590 includes detaching a fuse (which may be burnt/spent or which may not yet be burnt/spent and thus the user may be proactively retrofitting the controller unit) from an interface at step 592 and mounting a positive temperature coefficient device to the interface at step 594. In various embodiments, step 592 includes detaching the burnt fuse from a current protection interface of a circuit board of the controller unit and step 594 includes mounting the positive temperature coefficient device to the same current protection interface of the circuit board. In various embodiments, the controller unit may be utilized in a new, explosion restricted area of the aircraft or the existing location of the controller unit may have a requirement change that changes the location to be deemed and explosion restricted area. In such situations, utilizing/mounting a positive temperature coefficient device to the controller unit at step 594 may be performed instead of replacing a conventional fuse. In various embodiments, the method 590 of repairing the controller unit can be performed without modifying or redesigning the circuit board and/or the current protection interface. In various embodiments, instead of replacing a conventional fuse with a positive temperature coefficient device on an existing controller unit, a new controller unit may be designed/configured to have a positive temperature coefficient device instead of a conventional fuse.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A controller unit (100) for an aircraft control system, the controller unit (100) comprising:
a circuit board (105) comprising conductive traces and a plurality of mounted electronic components forming a circuit; and
a positive temperature coefficient device (110) mounted to the circuit board (105), wherein the positive temperature coefficient device (110) is configured to provide overcurrent protection for the circuit.

2. The controller unit of claim 1, wherein the positive temperature coefficient device (110) is made from a polymeric material.

3. The controller unit of claim 2, wherein the polymeric material comprises conductive particles distributed in an organic crystalline matrix, and preferably wherein the conductive particles comprise carbon black, and preferably wherein the positive temperature coefficient device (110) is resettable.

4. An aircraft control system (40) of an aircraft, the aircraft control system comprising:
an electronics bay (420) comprising a controller slot (422A, 422B, 422C, 422D, 422E, 422F, 422G, 422H); and
a controller unit (400) mounted to the controller slot (422A, 422B, 422C, 422D, 422E, 422F, 422G, 422H);
wherein at least one of the electronics bay (420) and the controller unit (400) comprises a positive temperature coefficient device configured to provide overcurrent circuit protection.

5. The aircraft control system of claim 4, wherein the at least one of the electronics bay (420) and the controller unit (400) are located in an explosion-restricted area of the aircraft.

6. The aircraft control system of claim 4 or 5, wherein the controller slot (422A, 422B, 422C, 422D, 422E, 422F, 422G, 422H) is a first controller slot of a plurality of controller slots, wherein each controller slot of the plurality of controller slots corresponds to and is configured to electrically communicate with a respective aircraft assembly of a plurality of aircraft assemblies of the aircraft.

7. The aircraft control system of claim 6, wherein the controller unit (400) is configured to control a landing assembly of the aircraft.

8. The aircraft control system of claim 6, wherein the controller unit (400) is configured to control a braking assembly of the aircraft.

9. The aircraft control system of any of claims 4 to 8, wherein the positive temperature coefficient device (110) is made from a polymeric material, and preferably wherein the polymeric material comprises conductive particles distributed in an organic crystalline matrix, and preferably wherein the conductive particles comprise carbon black.

10. The aircraft control system of claim 4, wherein the positive temperature coefficient device (110) is resettable.

11. A method (590) of repairing a controller unit (400) in an aircraft, the method comprising:
detaching (592) a fuse from a current protection interface of a circuit board of the controller unit;
mounting (594) a positive temperature coefficient device (110) to the current protection interface of the circuit board (105), wherein the positive temperature coefficient device is configured to provide overcurrent protection for the circuit board (105).

12. The method of claim 11, wherein mounting (594) the positive temperature coefficient device (110) is performed with the controller unit in an installed configuration in the aircraft.

13. The method of claim 12, wherein the controller unit (400) is configured to be used in an explosion-restricted area of the aircraft.

14. The method of claim 11 or 12, wherein the positive temperature coefficient device (100) is made from a polymeric material.

15. The method of claim 14, wherein the polymeric material comprises conductive particles distributed in an organic crystalline matrix, and preferably wherein the conductive particles comprise carbon black.
